# DEMANDE DE BREVET EUROPEEN

(11) **EP 4 195 044 A1**
(43) Date de publication de la demande: **14.06.2023**
(21) Numéro de dépôt: 21213553.7
(22) Date de dépôt: 09.12.2021
(51) Int. Cl.: G06F 9/48, G06F 9/50

(54) **MÉTHODE D'OPTIMISATION DE LA CONSOMMATION ÉNERGÉTIQUE D'UNE INFRASTRUCTURE INFORMATIQUE PAR SUSPENSION DE TRAVAUX**

(71) Demandeur: Bull SAS, 78340 Les Clayes-sous-Bois (FR)
(72) Inventeur: Gerphagnon, Jean-Olivier, 38450 Vif (FR); Berrée, Jean-François, 38610 GIERES (FR)
(74) Mandataire: Cabinet Camus Lebkiri

(57) **Abrégé**

Un aspect de l'invention concerne une méthode d'optimisation de la consommation énergétique d'une infrastructure informatique comprenant une pluralité de nœuds de calcul, chacun associé à une pluralité de travaux, la méthode comportant les étapes suivantes :
- Réception d'une demande de réduction de consommation énergétique comportant un objectif de réduction de consommation énergétique ;
- Détermination d'un ensemble de travaux à suspendre, l'ensemble de travaux étant déterminé en fonction de l'objectif de réduction de consommation énergétique reçu ;
- Emission vers un environnement d'exécution de chaque nœud de calcul associé à un travail compris dans l'ensemble de travaux déterminé, d'une demande de suspension comprenant ledit travail ;
- A réception d'une demande de suspension, suspension du travail compris dans la demande de suspension reçue, la suspension étant réalisée via un ensemble d'instructions non natives implémentées au niveau de l'environnement d'exécution de chaque nœud de calcul ;
- Attente active par le travail suspendu d'un message d'arrêt de suspension comprenant ledit travail suspendu, l'attente active étant réalisée via un ensemble d'instructions non natives implémentées au niveau de l'environnement d'exécution de chaque nœud de calcul.

## Description

### DOMAINE TECHNIQUE DE L'INVENTION

Le domaine technique de l'invention est celui des calculateurs haute performance et plus particulièrement celui de l'optimisation de la consommation énergétique de tels calculateurs.

La présente invention concerne une méthode d'optimisation de la consommation énergétique d'une infrastructure informatique, ainsi qu'une infrastructure informatique, un produit-programme d'ordinateur et un support d'enregistrement pour mettre en œuvre ladite méthode d'optimisation.

### ARRIERE-PLAN TECHNOLOGIQUE DE L'INVENTION

Un calculateur haute performance ou HPC pour « High Performance Computer » en anglais, est une infrastructure informatique permettant d'exécuter simultanément un grand nombre de travaux, tels que des tâches logicielles ou des calculs distribués, grâce à son grand nombre de ressources physiques et logiques, en particulier grâce à son nombre important de nœuds de calcul. Ce grand nombre de ressources est très consommateur en énergie, ce qui génère une empreinte carbone importante.

Afin de limiter l'impact écologique de tels infrastructures, les exploitants de solutions HPC ont mis en œuvre des technologies pour optimiser l'utilisation des ressources des HPC, notamment en cas de réduction de l'approvisionnement en énergie. Deux approches sont principalement privilégiées : la première consiste à limiter le nombre total de travaux pouvant être exécutés à tout instant ou encore à limiter le nombre maximal de ressources pouvant être allouées ; la seconde consiste à limiter la consommation unitaire de chaque ressource via des mécanismes de seuillage tels que la gestion dynamique des paramètres de fonctionnement tension fréquence (« dynamic voltage and frequency scaling » DVFS, en anglais). Ces approches, implémentées au niveau du système d'exploitation, ont cependant plusieurs inconvénients, notamment du fait que les applications n'ont jamais connaissance de la demande de réduction de consommation en énergie ; c'est le système d'exploitation qui va gérer la diminution de consommation.

En ce qui concerne la première approche, imposer une limite au nombre de travaux pouvant s'exécuter simultanément ou au nombre de ressources pouvant être allouées à un instant donné entraîne l'arrêt des travaux en cours dont l'exécution n'est plus permise. Cette technique garantit donc un gain de consommation immédiat étant donné que les ressources sont simplement en attente, en anglais « idle », voire arrêtées. Cependant, le temps nécessaire à l'arrêt des travaux et l'énergie consommée en résultant ne sont pas pris en compte.

En effet, si une sauvegarde des travaux à arrêter est requise (on parle en anglais de « checkpointing »), elle entraîne une consommation ponctuelle accrue en énergie pour le transfert des données des travaux vers des espaces de stockage. Cet aspect est d'autant plus pénalisant que certains travaux génèrent une grande quantité de données temporaires au cours de leur exécution qui ne sont pas habituellement conservées en fin du travail.

Par ailleurs, dans l'éventualité où de tels points de sauvegarde ne sont pas prévus dans l'exécution du travail, l'intégralité du travail est perdue au moment de son arrêt. Ceci implique une perte de temps et un gaspillage d'énergie d'autant plus coûteux que le temps d'exécution de certains calculs est long et peut avoir débuté plusieurs heures, jours voire semaines avant leur arrêt.

Enfin, l'arrêt des travaux et/ou des ressources impacte aussi leur reprise. En effet, le redémarrage des travaux et/ou des ressources entraîne un coût en temps et en énergie non négligeable, auquel s'ajoute un éventuel coût d'accès et lecture aux données stockées au moment du point de sauvegarde, un coût pour la replanification des travaux et l'allocation des ressources, et tous les risques d'erreur associés à ces divers points. Il est également possible que les calculs arrêtés se voient à nouveau mis à l'arrêt lors d'une nouvelle demande de réduction de la consommation en énergie. Cela nécessite donc des algorithmes et protocoles d'allocation des ressources et de la gestion des arrêts des travaux plus complexes pour pallier l'éventualité qu'un travail soit bloqué dans une boucle d'arrêt-redémarrage infinie.

Un autre inconvénient est que cette solution, dans le cas d'un arrêt électrique des ressources, impacte également le temps moyen entre pannes ou MTBF pour « Mean Time Between Failures » en anglais, des composants. Il s'avère, en effet, que les arrêts et démarrages des composants électroniques ont un impact négatif sur leur état de fonctionnement et entraînent des pannes de plus en plus fréquentes dues à la fatigue de ces composants. En outre, ces arrêts et démarrages ont un impact non négligeable sur l'empreinte carbone des installations HPC puisque plus le MTBF est réduit et plus l'empreinte carbone des composants augmente.

La première approche est donc très efficace pour réduire ponctuellement la consommation en énergie, mais n'est pas viable dans une perspective à long terme pour le maintien des installations, la planification des travaux, ainsi que l'empreinte carbone et la consommation énergétique globales, puisque le gain ponctuel en énergie est pondéré par les surconsommations postérieures à la période de réduction de la consommation.

La seconde approche consiste en un seuillage de la consommation de chaque ressource afin de limiter la consommation totale du HPC. Cette méthode est efficace, mais ses effets sur l'exécution des travaux se répercute de manière inégale. En effet, le seuillage est le plus souvent instauré de manière statique, c'est-à-dire en imposant une valeur fixe pour la réduction de la consommation afin de rentrer dans une enveloppe définie, par exemple une consommation maximale à 70% du maximum. Cependant, il n'est pas simple d'estimer les pertes de performances des processeurs qui ne diminuent pas linéairement avec la réduction de l'énergie maximale disponible. Il n'est donc pas garanti qu'une diminution de 30% de la consommation n'aura un impact que de 30 % sur le temps d'exécution du travail. Par conséquent, si on considère la durée totale d'exécution du travail, l'énergie totale nécessaire à la réalisation de ce travail excèdera la consommation totale de ce même travail exécuté par un processeur alimenté à 100 % de ses capacités, et ceci sans que l'utilisateur en ait conscience.

Un autre aspect, lié au point précédent, est qu'il est peu aisé d'optimiser la gestion des ressources et la planification des travaux en utilisant cette méthode de seuillage. Avoir une optimisation fine et adaptée demanderait de prendre en compte beaucoup de paramètres qui ne sont habituellement pas gérés par les protocoles de planification et qui complexifient l'optimisation. Cet aspect est d'autant plus pénalisant que, alors qu'ils continuent à fonctionner, les processus exécutant les applications n'ont aucune idée de cette diminution et donc de l'impact potentiel sur leur performance.

Enfin, le seuillage peut s'avérer insuffisant. En effet, il est rarement possible d'appliquer une réduction adaptative aux différentes ressources en fonction du travail qu'elles exécutent. Le seuil de consommation est en général identique pour toutes les ressources. Il n'est pas pris en compte que certains travaux nécessitent moins d'énergie pour s'exécuter, ou que si des ressources sont au repos alors les autres peuvent augmenter leur seuil de consommation maximale sans pour autant dépasser la limite totale de consommation imposée. Dans les faits, le seuillage imposé est entre 50 % et 80 % de la consommation maximale possible des ressources, mais il est rarement plus bas, ce qui signifie que le gain en consommation est au mieux de l'ordre de 50 % de la consommation maximale.

Toutefois, l'avantage principal de cette seconde approche, en particulier en comparaison avec la première approche, est que les travaux continuent de s'exécuter en dépit de la diminution de l'énergie disponible, et que les ressources physiques sont toujours opérationnelles.

Cette seconde approche est donc moins pénalisante du point de vue des ressources en ce qu'elle ne nécessite pas l'arrêt des composants, et a donc moins d'impact sur le MTBF. En revanche, l'impact de cette approche sur la durée d'exécution des travaux est non négligeable, pouvant mener à une consommation en énergie finale bien supérieure à celle sans réduction de l'énergie disponible. Par ailleurs, avoir un protocole de planification des travaux et d'allocation des ressources optimal nécessite de prendre en compte beaucoup de paramètres qui complexifient l'optimisation réalisée par un tel protocole.

Il existe donc un besoin d'optimiser la consommation énergétique d'une infrastructure informatique en limitant au maximum l'augmentation du coût énergétique individuel total des travaux et sans réduire la durée de vie des composants afin de limiter l'empreinte carbone du HPC.

### RESUME DE L'INVENTION

L'invention offre une solution aux problèmes évoqués précédemment, en permettant la mise en œuvre d'une méthode d'optimisation de la consommation énergétique qui permette de réduire la consommation énergétique et l'impact carbone d'une infrastructure informatique, sans augmenter le coût énergétique individuel total des travaux exécutés par l'infrastructure informatique et sans engendrer de dégradations prématurées des composants de l'infrastructure informatique afin de préserver leur durée de vie.

Un premier aspect de l'invention concerne une méthode d'optimisation de la consommation énergétique d'une infrastructure informatique comprenant une pluralité de nœuds de calcul, chaque nœud de calcul étant associé à une pluralité de travaux en cours d'exécution ou en attente d'exécution sur ledit nœud de calcul, la méthode comportant les étapes suivantes :
- Réception d'une demande de réduction de consommation énergétique comportant un objectif de réduction de consommation énergétique ;
- Détermination d'un ensemble de travaux à suspendre parmi la pluralité de travaux associée à chaque nœud de calcul, l'ensemble de travaux étant déterminé en fonction de l'objectif de réduction de consommation énergétique reçu ;
- Emission vers un environnement d'exécution de chaque nœud de calcul associé à au moins un travail compris dans l'ensemble de travaux déterminé, d'une demande de suspension comprenant ledit travail ;
- A réception d'une demande de suspension, suspension du travail compris dans la demande de suspension reçue, la suspension étant réalisée via un ensemble d'instructions non natives implémentées au niveau de l'environnement d'exécution du travail sur chaque nœud de calcul de l'infrastructure informatique associé au dit travail ;
- Attente active par le travail suspendu d'un message d'arrêt de suspension comprenant ledit travail suspendu, l'attente active étant réalisée via un ensemble d'instructions non natives implémentées au niveau de l'environnement d'exécution du travail sur chaque nœud de calcul de l'infrastructure informatique associé au dit travail.

Grâce à l'invention, la consommation énergétique de l'infrastructure informatique est optimisée sans augmenter notablement le coût énergétique individuel total des travaux. En effet, suspendre des travaux et placer les nœuds de calcul dans un état d'attente active permet de réaliser un gain en consommation énergétique proche de celui d'un arrêt des travaux et/ou des nœuds de calcul, à la différence que les travaux suspendus peuvent être redémarrés de façon quasi-instantanée à n'importe quel instant, puisque les nœuds de calcul ne sont pas mis à l'arrêt par l'attente active. L'arrêt de l'attente active permet alors de lever de la suspension des travaux. Il n'y a ainsi pas de surconsommation induite par la réalisation ou le chargement d'un point de sauvegarde, ni par un redémarrage des nœuds de calcul.

De plus, il n'y a pas de réduction de performance lors de l'exécution du travail, puisqu'il n'est pas question de brider l'alimentation/fréquence du nœud de calcul exécutant le travail. La durée d'exécution des travaux n'est donc pas impactée par une baisse de performances des nœuds de calcul mais seulement par la mise en attente active qui augmente de facto le temps jusqu'à la solution, on parle en anglais de « time to solution ». La méthode permet donc de ne pas augmenter l'empreinte carbone des travaux et de l'infrastructure informatique tout en maîtrisant les contraintes de consommation énergétique.

En outre, les nœuds de calcul n'étant pas mis à l'arrêt, il n'y a pas de dégradation précoce induite par la méthode. Ainsi, la durée de vie des composants est préservée, ce qui permet de limiter l'empreinte carbone des travaux et de l'infrastructure informatique.

Par ailleurs, les travaux en attente active ne nécessitent que peu d'énergie pour maintenir cet état, mais c'est également le cas pour les processus indispensables au fonctionnement du nœud de calcul, tels que le système d'exploitation et les noyaux. Un nœud de calcul peut donc être placé dans un état de fonctionnement minimal sans pénaliser l'attente active ou ses processus indispensables à son fonctionnement et ainsi réduire la consommation totale de l'infrastructure informatique.

L'intérêt d'implémenter ces ensembles d'instructions au niveau de l'environnement d'exécution, ou « runtime » en anglais, dans lequel ces instructions ne sont pas natives, ce qui est notamment le cas pour un environnement d'exécution basé sur la norme Message Passing Interface (MPI), est d'être en mesure d'utiliser ces instructions pour n'importe quelle application exécutable sur l'infrastructure informatique. On entend par instructions non-natives des instructions qui n'existent pas dans l'environnement d'exécution et qui doivent être spécifiquement implémentées dans celui-ci. Il n'y a alors pas besoin d'implémenter ces instructions pour chacune des applications, contrairement aux pratiques précédemment décrites dans l'état de l'art qui sont implémentées au niveau du système d'exploitation de chaque nœud. De plus, l'application est directement suspendue au niveau applicatif et non par le système d'exploitation qui produit un arrêt brutal de tous les processus du nœud de calcul auquel il est associé. La méthode selon l'invention est ainsi réalisable indépendamment des spécificités matérielles et logicielles de l'infrastructure informatique et de ses nœuds, tel que le système d'exploitation.

Enfin, la méthode selon l'invention permet une réduction de consommation plus fine. En effet, le traitement de la suspension étant effectué au niveau de l'environnement d'exécution de chaque nœud, donc au niveau des processus des applications, la suspension peut spécifiquement cibler certains travaux à suspendre tout en laissant d'autres travaux s'exécuter. Par exemple, si deux applications sont exécutées sur un même nœud, il est possible de suspendre uniquement les processus associés à l'exécution d'un des travaux et pas ceux associés au second travail, ce qui n'est pas faisable en utilisant les techniques existantes.

Outre les caractéristiques qui viennent d'être évoquées dans les paragraphes précédents, la méthode selon l'invention peut présenter une ou plusieurs caractéristiques complémentaires parmi les suivantes, considérées individuellement ou selon toutes les combinaisons techniquement possibles.

Selon une variante de l'invention, l'ensemble d'instructions est basé sur la norme Message Passing Interface.

Selon une variante de l'invention, chaque travail est représenté par un ou plusieurs processus sur un ou plusieurs nœuds de calcul de l'infrastructure informatique, et l'étape de suspension dudit travail est une étape de suspension synchrone du ou des processus exécutant ledit travail.

Cette variante garantit que l'état de suspension permettra l'arrêt de l'exécution de ces processus de façon synchrone et sans erreur d'exécution.

Selon une variante de l'invention, une pluralité de travaux répartie sur un ou plusieurs nœuds de calculs est associée à une même application, et l'étape de suspension de la méthode est une étape de suspension de l'ensemble des travaux associés à ladite application.

Cette variante permet de cibler une ou plusieurs applications dont les travaux, répartis sur un ou plusieurs nœuds, sont à suspendre. Ainsi, si un nœud de calcul exécute simultanément des travaux issus de deux applications différentes, seuls les travaux, et processus associés, des applications ciblées seront suspendus et non tous les travaux et les processus associés dudit nœud.

Selon une variante de réalisation, la méthode comporte en outre à réception d'un message d'arrêt de suspension par l'environnement d'exécution du nœud de calcul, une étape d'arrêt de la suspension du travail compris dans le message d'arrêt de suspension reçu, l'arrêt de suspension étant réalisé via un ensemble d'instructions non natives implémentées au niveau de l'environnement d'exécution du travail sur chaque nœud de calcul de l'infrastructure informatique associé au dit travail.

Cette variante permet de lever la suspension des travaux concernés à réception d'un message d'arrêt de suspension au niveau des environnements d'exécution des nœuds de calcul concernés.

Selon une variante de l'invention, l'étape d'arrêt de suspension du travail est une étape d'arrêt de suspension synchrone du ou des processus exécutant ledit travail.

Cette variante garantit que l'état de suspension permettra le redémarrage de l'exécution de ces processus, après la fin de la suspension, de façon synchrone et sans erreur d'exécution.

Selon une variante de réalisation, la demande de réduction de consommation énergétique comprend en outre une information de levée de réduction, la méthode comprenant en outre une étape d'émission du message d'arrêt de suspension vers l'environnement d'exécution du travail sur le nœud de calcul correspondant, l'émission dépendant de ladite information de levée de réduction.

Selon une variante de réalisation, la demande de réduction de consommation énergétique comprend en outre une information de date et horaire de réduction et/ou une information de durée de réduction.

Grâce à cette variante, la demande de suspension peut en outre être réalisée à une date et un horaire prédéfinis et/ou pour une durée prédéterminée. Ceci permet en outre de garantir la synchronicité de la suspension et de l'arrêt de la suspension des travaux et des processus associés pour permettre un redémarrage de l'exécution des processus sans défaut de synchronicité ou erreur d'exécution.

Selon une variante de réalisation, chaque travail est associé à au moins une information de travail et l'ensemble de travaux est en outre déterminé en fonction de l'information de travail associée à chaque travail.

Cette variante permet de prendre en compte des informations concernant les travaux, par exemple une information sur un ordre de priorité ou sur une consommation énergétique estimée, pour déterminer les travaux à suspendre.

Un deuxième aspect de l'invention concerne une infrastructure informatique comportant une pluralité de nœuds de calcul, chaque nœud de calcul étant associé à une pluralité de travaux en cours d'exécution ou en attente d'exécution sur ledit nœud de calcul, l'infrastructure informatique comprenant :
- Un module de réception, configuré pour recevoir une demande de réduction de consommation énergétique comportant un objectif de réduction de consommation énergétique ;
- Un module de traitement, configuré pour réaliser les étapes suivantes :
   - Détermination d'un ensemble de travaux à suspendre parmi la pluralité de travaux associée à chaque nœud de calcul, l'ensemble de travaux étant déterminé en fonction de l'objectif de réduction de consommation énergétique reçu ;
   - Emission vers un environnement d'exécution de chaque nœud de calcul associé à au moins un travail compris dans l'ensemble de travaux déterminé, d'une demande de suspension comprenant ledit travail ;
Chacun des nœuds de calcul étant configuré pour réaliser les étapes suivantes au niveau de l'environnement d'exécution :
- A réception d'une demande de suspension, suspension du travail compris dans la demande de suspension reçue ;
- Attente active d'un message d'arrêt de suspension comprenant un travail suspendu.

Un autre aspect de l'invention concerne un produit-programme d'ordinateur comprenant des instructions qui, quand le programme est exécuté sur un ordinateur, conduisent celui-ci à mettre en œuvre les étapes de la méthode selon l'invention.

Un dernier aspect de l'invention concerne un support d'enregistrement lisible par ordinateur comprenant des instructions qui, lorsqu'elles sont exécutées par un ordinateur, conduisent celui-ci à mettre en œuvre les étapes de la méthode selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
La figure 1 est un schéma synoptique illustrant l'enchaînement des étapes d'une méthode selon l'invention.
La figure 2 montre une représentation schématique d'une infrastructure informatique selon l'invention.
La figure 3 illustre un exemple d'application de la méthode selon l'invention sur une infrastructure de type calculateur haute performance HPC.
La figure 4 illustre un exemple d'utilisation d'une méthode telle que décrite par l'état de l'art pour la réduction de la consommation énergétique d'une infrastructure informatique.
La figure 5 illustre un exemple de réduction de la consommation énergétique d'une infrastructure informatique par l'utilisation d'une méthode selon l'état de l'art.
La figure 6 illustre un exemple d'utilisation de la selon l'invention par opposition à une méthode selon l'état de l'art.
La figure 7 illustre un exemple de réduction de la consommation énergétique d'une infrastructure informatique par l'utilisation de la méthode selon l'invention.

### DESCRIPTION DETAILLEE

Sont décrits ci-après la méthode et le système selon l'invention, et les variantes associées avec référence aux figures. La description qui suit doit être considérée comme de nature illustrative et non limitative au regard de l'invention.

Sauf précision contraire, un même élément apparaissant sur des figures différentes présente une référence unique.

L'invention concerne une méthode d'optimisation de la consommation énergétique d'une infrastructure informatique. L'invention concerne également une infrastructure informatique pour mettre en œuvre la méthode selon l'invention.

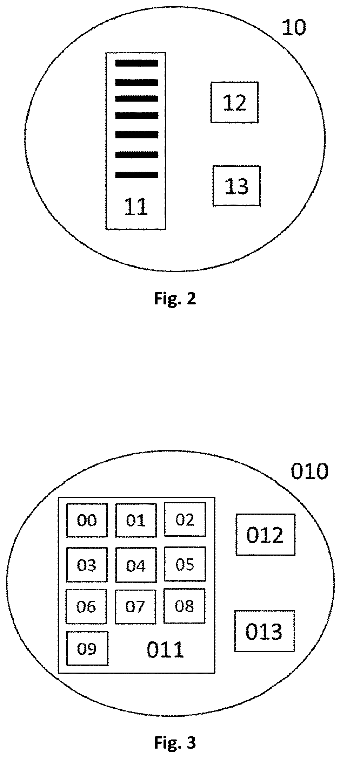

Ainsi que présenté à la figure 2, l'infrastructure informatique 10 comprend :
- Une pluralité de nœuds de calcul 11 ;
- Un module de réception 12 ;
- Un module de traitement 13.

Par nœud de calcul est entendu tout type de dispositif permettant l'exécution de travaux, par exemple des travaux de calcul pour une simulation par éléments finis.

Chaque nœud de calcul 11 de la pluralité de nœuds de calcul 11 est associé à une pluralité de travaux en cours d'exécution ou en attente d'exécution sur ledit nœud de calcul 11. Les travaux en attente d'exécution sont des travaux dont l'exécution est planifiée sur ledit nœud de calcul 11 après la fin de l'exécution du ou des travaux en cours sur ledit nœud de calcul 11. Les travaux en attente d'exécution sont par exemple placés en fil d'attente sur ledit nœud de calcul 11.

L'agencement de la pluralité de nœuds de calcul 11 est typiquement celui d'un environnement de calcul distribué pour la parallélisation de travaux.

Le module de réception 12 peut être n'importe quel module configuré pour recevoir des signaux. Les signaux peuvent être composés d'une ou plusieurs données de nature diverse, telles que des messages de texte, des données numéraires ou des instructions.

Le module de traitement 13 peut-être n'importe quel type de module configuré pour exécuter des commandes ou instructions qui lui sont soumises. Le module de traitement 13 comporte a minima un processeur et une mémoire.

Préférentiellement, l'infrastructure informatique 10 est un calculateur haute performance ou HPC. Le module de traitement 13 peut ainsi également être le module de gestion du HPC qui opère la répartition des travaux et l'allocation de la pluralité de nœuds de calcul 11 pour exécuter les travaux.

L'infrastructure informatique 10 peut en outre comporter un ou plusieurs communicateurs qui permettent à la pluralité de nœuds de calcul 11 de communiquer entre eux et avec le module de traitement 13. Les communicateurs ne sont pas représentés sur la figure 2.

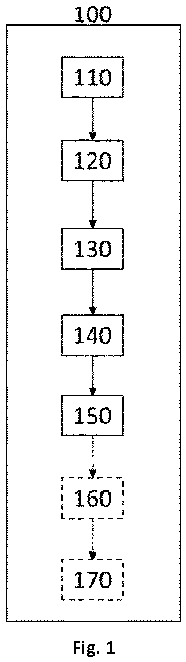

Selon l'invention, l'infrastructure informatique 10 est configurée pour mettre en œuvre la méthode 100 selon l'invention illustrée à la figure 1.

La méthode 100 selon l'invention comporte cinq étapes principales et deux étapes optionnelles.

La première étape de la méthode 100 est une étape 110 de réception d'une demande de réduction de consommation énergétique.

L'étape 110 de réception de la demande de réduction est préférentiellement réalisée par le module de réception 13 de l'infrastructure 10.

La demande de réduction de consommation énergétique peut être toute demande concernant une réduction de l'énergie consommée par l'infrastructure informatique 10. Préférentiellement, la demande de réduction de consommation énergétique est une demande d'effacement concernant la consommation énergétique de la pluralité des nœuds de calcul 11.

La demande de réduction de consommation énergétique peut provenir d'un fournisseur d'énergie, par exemple dans un contexte de régulation de la charge d'un réseau électrique afin de limiter les effets de surcharge du réseau et éventuellement des discontinuités de fourniture de courant. La demande de réduction de consommation énergétique peut également provenir d'un gestionnaire de consommation énergétique, par exemple au sein d'une entreprise, afin de réguler la consommation énergétique des installations informatiques pour éviter des plages creuses telles que les week-ends et les vacances, et des plages de surconsommation associées à des sur ou sous-utilisations des installations informatiques.

La demande de réduction de consommation énergétique comporte au moins un objectif de réduction de consommation énergétique.

L'objectif de réduction de consommation énergétique est un objectif que l'infrastructure informatique 10 doit atteindre en termes de consommation énergétique afin de satisfaire la demande de réduction de consommation énergétique.

L'objectif de réduction de consommation énergétique peut être n'importe quel type de donnée indiquant un objectif de réduction de consommation énergétique à atteindre. Par exemple, il peut s'agir d'une valeur qui indique une réduction de consommation énergétique proportionnelle à la consommation maximale de l'infrastructure informatique 10, telle que 10 % de la consommation maximale de l'infrastructure informatique 10.

La demande de réduction de consommation énergétique peut également comporter une ou plusieurs informations de date et horaire et/ou une ou plusieurs informations de durée.

A partir de l'objectif de réduction de consommation énergétique reçu à l'étape 110, la méthode 100 permet à une deuxième étape 120 de déterminer un ensemble de travaux à suspendre parmi la pluralité de travaux associée à chaque nœud de calcul 11 de l'infrastructure informatique 10.

L'ensemble de travaux à suspendre comporte un ou plusieurs travaux à suspendre. La façon dont la détermination de l'ensemble de travaux à suspendre est effectuée n'est pas limitative dans l'invention, la seule contrainte étant que la suspension de l'ensemble de travaux à suspendre permette d'atteindre l'objectif de réduction de consommation énergétique reçu. Il peut s'agir d'une détermination arbitraire des travaux à suspendre ou d'une détermination optimisée, par exemple en s'appuyant sur une stratégie d'allocation des nœuds de calcul 11 déjà connue dans l'état de l'art. Il est possible que chaque travail soit associé à au moins une information de travail et que la détermination de l'ensemble des travaux à suspendre soit dépendante d'une ou plusieurs informations de travail concernant lesdits travaux. L'information de travail est par exemple une information sur le niveau de priorité des travaux ou d'une information sur la consommation actuelle ou estimée du travail.

L'étape 120 de détermination est préférentiellement réalisée par le module de traitement 13.

Préférentiellement, le module de traitement 13 définit une stratégie d'allocation des nœuds de calcul 11 et de travaux à suspendre en fonction de l'objectif de réduction de consommation énergétique reçu. Par exemple, le module de réception 12 ayant reçu une demande de réduction de consommation énergétique comportant un objectif de réduction de consommation énergétique de 20 % de la consommation énergétique du HPC par rapport à sa consommation actuelle, le module de traitement 13 détermine une stratégie de travaux en cours à suspendre afin de réduire la consommation énergétique du HPC jusqu'à un niveau satisfaisant la demande de réduction de consommation énergétique.

La troisième étape 130 de la méthode 100 consiste à émettre une demande de suspension vers un environnement d'exécution, également appelé « runtime » en anglais, d'un ou plusieurs nœuds de calcul 11. La demande de suspension indique qu'au moins un travail associé au nœud de calcul 11 récepteur est à suspendre.

La demande de suspension n'est émise que vers les nœuds de calcul 11 associés à au moins un travail à suspendre, c'est-à-dire à au moins un travail compris dans l'ensemble de travaux déterminé lors de l'étape 120 de la méthode 100. La demande de suspension est donc personnalisée pour chaque nœud de calcul 11 en fonction des travaux auxquels il est associé.

Les travaux peuvent être regroupés sous une même application. La demande de suspension peut alors concerné une ou plusieurs applications et être émise vers les nœuds de calcul 11 dont les travaux sont associés à l'exécution de ladite application. En outre, si un nœud de calcul 11 exécute simultanément des travaux associés à des applications différentes, seuls les travaux associés à l'application concernée par la demande de suspension sont suspendus.

Sur chaque nœud de calcul 11, l'exécution des travaux peut être effectuée par un ou plusieurs processus. La suspension dudit travail implique alors de suspendre le ou les processus permettant l'exécution de ce travail. La suspension de ces processus est effectuée de manière synchrone de façon à pour garantir la synchronisé de l'exécution des processus et prévenir des erreurs d'exécution desdits processus. La synchronisation de la suspension des processus du travail peut être réalisée par n'importe quel procédé de synchronisation, par exemple en définissant un décompte temporel ou une date et un horaire de mise en place de la suspension.

L'étape 130 d'émission est préférentiellement réalisée par le module de traitement 13.

L'émission peut être réalisée par toute technique d'émission, par exemple une émission par unicast, multicast ou broadcast.

La demande de suspension peut être élaborée par le module de traitement 13. La demande de suspension peut également être le fruit d'un calcul effectué par le module de traitement 13.

Préférentiellement, une demande de suspension est émise vers les environnements d'exécution d'une partie de la pluralité de nœuds de calcul 11 en fonction de la stratégie d'allocation des travaux sur la pluralité de nœuds de calcul 11.

Dans le cas où la demande de réduction de consommation énergétique comporte également une information de date et d'horaire de réduction, cette information peut être utilisée afin de définir la date et l'horaire auxquels la demande de suspension devra être émise vers les nœuds de calcul 11 concernés de l'infrastructure informatique 10.

Si la demande de réduction de consommation énergétique comporte en outre une information de durée de réduction, cette information peut être utilisée afin de définir la période de temps durant laquelle la réduction de la consommation énergétique, et donc la durée durant laquelle un ou plusieurs travaux sont à suspendre, devra être maintenue. Cette information peut également être utilisée pour définir une durée maximale après laquelle la période de réduction de la consommation énergétique pourra être annulée. La demande de suspension peut en outre être déterminée en fonction de l'information de durée de réduction.

Lors de l'étape 140 de suspension de travaux de la méthode 100, l'environnement d'exécution, ou « runtime » en anglais, de chaque nœud de calcul 11 ayant reçu une demande de suspension émise à l'étape 130 concernant un ou plusieurs travaux, suspend l'exécution desdits travaux.

La suspension des travaux par un nœud de calcul 11 est réalisée sans stopper les processus indispensables au bon fonctionnement du nœud de calcul 11 et sans arrêter le nœud de calcul 11 qui est toujours en état de marche.

Préférentiellement, l'étape 140 de suspension est mise à œuvre grâce à l'exécution d'un ensemble d'instructions préalablement implémentées au sein de l'environnement d'exécution de chaque nœud de calcul 11 de l'infrastructure informatique 10. L'environnement d'exécution peut, à titre d'exemple, exploiter la norme Message Passing Interface (MPI). La suspension est alors transmise via des instructions par exemple contenues dans une instruction MPI_suspend(). De telles instructions n'étant pas nativement connues de la norme MPI, elles doivent être préalablement implémentées dans l'environnement d'exécution de chaque nœud de calcul 11.

D'autres normes peuvent être utilisées, tels que Open Multi-Processing (OpenMP) ou Partitioned Global Address Space (PGAS).

Une fois le ou les travaux suspendus, ceux-ci sont placés, à l'étape 150 de la méthode 100, dans un état d'attente active. Chaque travail attente active attend un message d'arrêt de suspension comprenant au moins un travail suspendu à l'étape 140 de suspension de travaux.

Préférentiellement, dans le cadre d'un HPC, l'état d'attente active est obtenu en plaçant chaque travail concerné dans une boucle d'attente active jusqu'à la réception du message d'arrêt de suspension. Autrement dit, l'état d'attente active est un état dans lequel le travail exécute un processus de boucle qui ne se brisera qu'à la satisfaction d'une condition, ladite condition étant la réception du message d'arrêt de suspension.

Cette attente active correspond donc à une suspension de l'avancée des processus liés à un ou plusieurs travaux, ce qui est l'équivalent d'une mise en attente ou « idle » en anglais. Il est également possible de réduire la consommation du nœud de calcul 11 en utilisant des mécanismes additionnels classiques tels que DVFS, par exemple pour réduire la fréquence du l'unité centrale de traitement (CPU) ou de l'unité de traitement graphique (GPU).

Préférentiellement, l'étape 150 d'attente active est mise à œuvre grâce à l'exécution d'un ensemble d'instructions préalablement implémentées au sein de l'environnement d'exécution de chaque nœud de calcul 11 de l'infrastructure informatique 10. Les instructions pour l'attente active sont alors contenues, par exemple, dans une instruction MPI_wait(). Une telle instruction n'étant pas nativement connue de la norme MPI, elle doit être préalablement implémentée dans l'environnement d'exécution de chaque nœud de calcul 11.

Il est en outre possible de placer les nœuds de calcul 11, sur lesquels les travaux sont en attente active, dans un état de consommation énergétique minimale, correspondant à un niveau de consommation strictement suffisant pour faire fonctionner les processus indispensables du nœud de calcul 11 et pour exécuter la boucle d'attente d'activé. Le niveau de consommation minimale peut par exemple être atteint en mettant en suspension tous les processus non indispensables au bon fonctionnement du nœud de calcul 11.

Par exemple, lorsque les nœuds de calcul 11 sont dans un état de consommation minimale, les communicateurs de l'infrastructure informatique 10 sont maintenus actifs pour garantir les transferts d'informations au sein de l'infrastructure informatique 10. Cela permet d'éviter d'avoir à redémarrer certains nœuds de calcul 11 pour réamorcer les communications de l'infrastructure informatique 10.

Divers mécanismes peuvent être utilisés afin d'atteindre ce niveau de consommation minimale. Par exemple, il est possible d'utiliser des mécanismes classiques de type « Dynamic Voltage and Frequency Scaling » (DFVS) permettant de réduire la consommation énergétique d'un processeur à son plus bas niveau sans impacter la boucle d'attente active.

La méthode 100 peut en outre comporter une étape 170 d'émission d'un message d'arrêt de suspension, vers l'environnement d'exécution d'un ou plusieurs nœuds de calcul 11, comprenant au moins un travail dont la suspension doit être levée.

La méthode 100 peut en outre comporter une étape 160 d'arrêt de la suspension d'au moins un travail suspendu, par l'environnement d'exécution ayant reçu un message d'arrêt de suspension de chaque nœud de calcul 11 correspondant.

Ainsi, lorsque l'environnement d'exécution d'un nœud de calcul 11 reçoit un message d'arrêt de suspension, le travail suspendu correspondant sort de son état d'attente active et reprend son exécution. Dans le cas où le nœud de calcul 11 avait atteint un niveau de consommation minimale, le nœud de calcul 11 reprend un niveau de consommation adapté sans pénaliser ni la reprise ni l'exécution du ou des travaux.

Le message d'arrêt de suspension peut être émis en fonction d'une information de levée de réduction. Préférentiellement, le message d'arrêt est généré par le module de traitement 13 en fonction de l'information de levée de réduction. Le message peut également être émis par un module tiers, extérieur à l'infrastructure informatique 10.

Préférentiellement, l'arrêt de la suspension est mis en œuvre grâce un ensemble d'instructions implémentées au niveau de l'environnement d'exécution de chaque nœud de calcul 11 de l'infrastructure informatique 10. Dans ce cas, les instructions pour l'arrêt de la suspension sont contenues, par exemple, dans une instruction MPI_recovery(). Une telle instruction n'étant pas nativement connue de la norme MPI, elle doit être préalablement implémentée dans l'environnement d'exécution.

L'information de levée de réduction peut être n'importe quelle information relative à la reprise des travaux en suspension. Il peut par exemple s'agir d'un message indiquant la fin de la demande de suspension. L'information de levée de réduction peut également être une date et/ou un horaire de fin de la demande de réduction de consommation énergétique qui indiquent une date et/ou un horaire auxquels la demande de réduction de consommation énergétique devra être levée.

L'information de levée de réduction peut être contenue dans la demande de réduction de consommation énergétique. Entre autres, l'information de levée de réduction peut être l'information de durée contenue dans la demande de réduction de consommation énergétique.

L'information de levée de réduction peut également être reçue par le module de réception 12 durant l'étape 150 d'attente active, et transmise au module de traitement 13 par le module de réception 12.

L'exécution d'un travail pouvant être effectuée par un ou plusieurs processus, l'arrêt de la suspension dudit travail implique d'arrêter la suspension du ou des processus permettant son exécution. L'arrêt de la suspension de ces processus est effectué de manière synchrone de façon à garantir une reprise sans erreur du travail à la fin de la suspension. La synchronisation de la suspension des processus du travail peut être réalisée par n'importe quel procédé de synchronisation, par exemple en définissant un décompte temporel ou une date et un horaire de mise en place de la suspension

Par ailleurs, il est possible de recevoir une nouvelle demande de réduction de consommation énergétique durant n'importe quelle étape de la méthode 100, contenant un nouvel objectif de réduction de consommation énergétique.

Cette nouvelle demande de réduction de consommation énergétique peut, par exemple, informer que la réduction attendue de la consommation énergétique de l'infrastructure informatique 10 a été modifiée pour passer de 20 % de réduction à 10 % de réduction par rapport à la consommation maximale de l'infrastructure informatique 10. Le module de traitement 13 peut alors élaborer une nouvelle stratégie d'allocation des nœuds de calcul 11 et émettre des messages d'arrêts de l'attente active vers les environnements d'exécution de certains nœuds de calcul 11 dont les travaux sont en suspension.

Par ailleurs, cette nouvelle demande de réduction de consommation énergétique peut par exemple requérir une plus grande réduction de consommation énergétique. Le module de traitement 13 peut alors décider d'émettre une demande de suspension vers les environnements d'exécution des nœuds de calcul 11 dont les travaux sont toujours en cours d'exécution et placer certains travaux en attente active.

Il est également possible que l'objectif de réduction de consommation énergétique indique une prolongation de la durée de la période de réduction de la consommation énergétique, par exemple dans le cas où une durée de la période de réduction de la consommation énergétique aurait été fournie au préalable à l'infrastructure informatique 10.

### Exemples de réalisation

Considérons, comme illustré à la figure 3, un calculateur haute performance 010 HPC comportant un ensemble 011 de dix nœuds de calcul (numérotés de 00 à 09), un gestionnaire de ressources 013 et un module de réception 012.

Une requête de calcul a été reçue par le HPC 010 pour des prédictions météorologiques et six nœuds 02 à 07 sont en train d'exécuter des travaux relatifs à ladite requête de calcul. Le nœud 01 exécute un travail correspondant à une requête de calcul antérieure. Les deux autres nœuds 08 et 09 sont inutilisés.

A un temps T1, le module de réception 012 du HPC 010 reçoit, via ses pilotes informatiques, une demande d'effacement indiquant un objectif de réduction de consommation énergétique de 10 % de la consommation maximale du HPC 010 à maintenir jusqu'à une date Tf ultérieure à T1.

Le HPC 010 exécute alors la méthode 100 telle que décrite précédemment. Le gestionnaire de ressources 013 détermine l'ordre de priorité des travaux en cours : les calculs pour les prédictions météorologiques sont de priorités équivalentes entre eux. Le gestionnaire 013 prend en compte le fait que le calcul de la requête antérieure touche à sa fin et qu'il monopolisera le nœud de calcul 01 que peu de temps encore. Le gestionnaire 013 détermine également que la consommation actuelle des travaux de prédiction météorologique est similaire d'un travail à l'autre.

Le gestionnaire de ressources 013 détermine alors que suspendre une partie des travaux en cours pour les prédictions météorologiques est suffisant pour réduire la consommation énergétique du HPC 010 en deçà de l'objectif de réduction de consommation énergétique.

Le gestionnaire de ressources 013 envoie alors une demande de suspension aux environnements d'exécution des nœuds de calcul 05, 06 et 07 pour suspendre les travaux en cours.

La demande de suspension comporte, par exemple, des instructions dont le passage est basé sur la norme Message Passing Interface (MPI). L'instruction pour la suspension des travaux en cours est par exemple MPI_suspend(). Cette commande n'étant pas nativement connue de la norme MPI, elle aura été préalablement implémentée au niveau de l'environnement d'exécution de chaque nœud de calcul. L'intérêt d'implémenter cette instruction spécifique au niveau de l'environnement d'exécution est d'être en mesure d'utiliser ces instructions qu'importe l'application. Il n'y a pas besoin d'implémenter ces instructions pour chacune des applications exécutables par l'infrastructure informatique 010.

Les environnements d'exécution des nœuds 05, 06 et 07 suspendent ainsi l'exécution des travaux pour le calcul des prédictions météorologiques et placent ces travaux dans un état d'attente active. L'attente active est, par exemple, réalisée au moyen d'une instruction du type MPI_wait(), également contenue dans la demande de suspension, et qui aura été préalablement implémentée puisqu'elle n'est pas native dans l'environnement d'exécution à la norme MPI.

La consommation actuelle du HPC 010 satisfait ainsi la demande d'effacement reçue à T1.

A un temps T2 ultérieur à T1 et antérieur à Tf, le travail sur le nœud de calcul 01 s'achève et libère le nœud de calcul 01. Le gestionnaire de ressources 013 reçoit une information de la part du nœud de calcul 01 de la fin du travail. Le gestionnaire de ressources 013 envoie alors un message d'arrêt de suspension à l'environnement d'exécution du nœud de calcul 05, qui peut alors récupérer l'énergie disponible pour exécuter son travail sans dépasser l'objectif de réduction de consommation énergétique imposé par la demande d'effacement.

L'arrêt de suspension peut, par exemple, être mis en œuvre via une commande MPI du type MPI_recovery(), non native et préalablement implémentée, comprise dans le message d'arrêt de suspension.

Le travail du nœud de calcul 05 sort alors de son état d'attente active à réception de l'instruction du message d'arrêt de suspension et poursuit l'exécution de son travail qui était en suspension.

La consommation du HPC 010 satisfait ainsi toujours la demande d'effacement reçue à T1.

A un temps T3 ultérieur à T2 et antérieur à Tf, le module de réception 012 du HPC 010 reçoit une nouvelle demande d'effacement indiquant une prolongation de la période de réduction de consommation jusqu'à une date Tfp. La nouvelle demande d'effacement informe également que l'objectif de réduction de consommation énergétique a été modifié et est maintenant de 20 % de la consommation maximale du HPC 010.

Le gestionnaire de ressources 013 élabore une nouvelle stratégie d'allocation en fonction de cette nouvelle demande d'effacement. Il détermine que placer en suspension un travail pour les prédictions météorologiques en cours suffit à satisfaire la nouvelle demande d'effacement. Il détermine également que le calcul du nœud de calcul 05 est pour l'instant le plus récent dans l'ordre d'exécution des calculs en cours et que les calculs en cours sur les nœuds 02 à 04 seront terminés avant. Le gestionnaire de ressources 013 détermine alors que le travail du nœud 05 doit être suspendu.

Le gestionnaire de ressources 013 envoie une demande de suspension, comprenant par exemple les instructions MPI_suspend() et MPI_wait(), à l'environnement d'exécution du nœud de calcul 05, et son travail en cours d'exécution est mis en suspension et placé en attente active.

La consommation actuelle du HPC 010 satisfait ainsi la nouvelle demande d'effacement reçue à T3.

A un temps T4 ultérieur à T3 et antérieur à Tfp, le HPC 010 reçoit une mise à jour de la demande d'effacement. Cette mise à jour indique que l'objectif de réduction de consommation énergétique est maintenant de 5 % de la consommation maximale du HPC 010.

Le gestionnaire de ressources 013 détermine ainsi que la suspension des nœuds 05 et 06 peut être levée. Le gestionnaire 013 envoie alors le message d'arrêt de suspension adapté aux environnements d'exécution des nœuds de calcul 05 et 06, comprenant par exemple l'instruction MPI_recovery(). Les travaux correspondants sortent de leur état d'attente active et reprennent leur exécution sans nécessité de redémarrage.

Au temps Tfp, le gestionnaire de ressources 013 envoie un message d'arrêt de suspension à l'environnement d'exécution de chacun des nœuds de calcul pour lesquels les travaux sont en suspens, comprenant par exemple l'instruction MPI_recovery(). En l'occurrence, il s'agit du nœud de calcul 07.

L'environnement d'exécution du nœud de calcul 07 qui reçoit le message d'arrêt de suspension sort son travail de l'état d'attente active et débute son exécution. La période de réduction de consommation énergétique du HPC 010 est terminée.

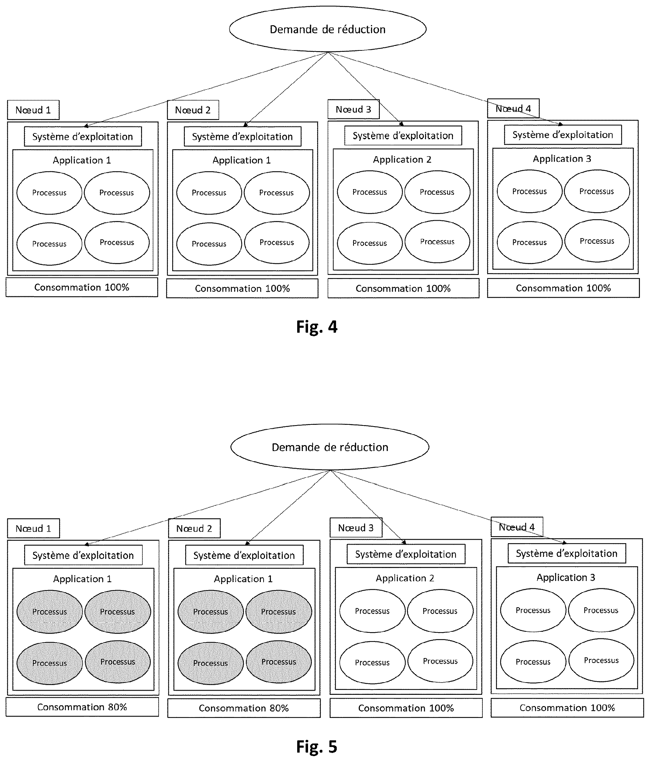

La figure 4 illustre le fonctionnement classique d'une méthode selon l'état de l'art pour la réduction de la consommation énergétique d'une infrastructure informatique 10. Avec une telle méthode, la demande de réduction est reçue au niveau du système d'exploitation de chaque nœud, qui lui-même va gérer l'alimentation des processus et des applications pour réduire la consommation énergétique de l'infrastructure informatique.

Toujours selon l'état de la technique, sur la figure 5, l'application 1 est visée par la demande de réduction. Les nœuds 1 et 2 concernés par l'exécution de l'application 1 sont arrêtés. Les processus associés à cette application sont également arrêtés. Les nœuds 3 et 4, non concernés par l'exécution de l'application 1, puisqu'ils exécutent des travaux relatifs aux l'applications 2 et 3, ne sont pas arrêtés. Ainsi, la consommation des nœuds 1 et 2 a suffisamment diminué pour valider l'objectif de la demande de réduction, mais cela nécessitera un redémarrage des nœuds et la réinitialisation des travaux, avec une consommation énergétique totale accrue. Les processus des nœuds dont les travaux ont été arrêtés sont indiqués en gris.

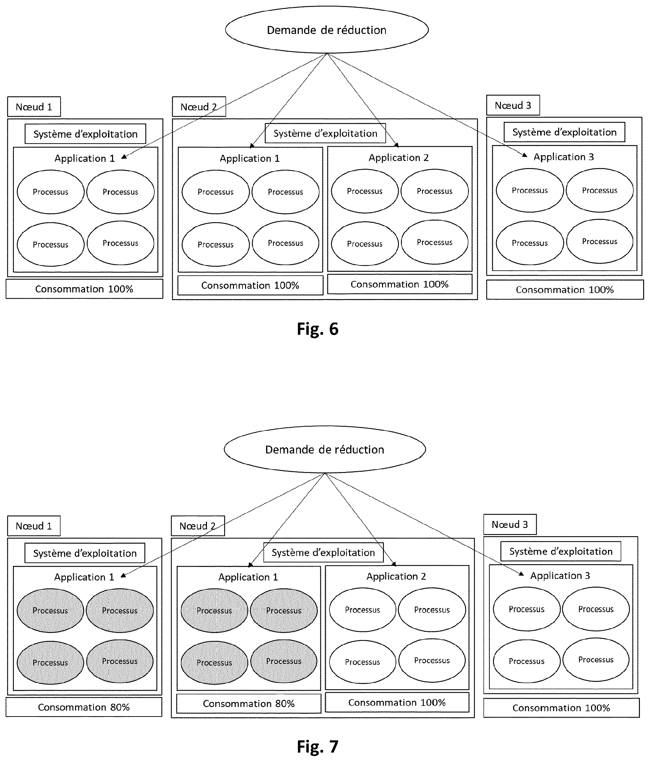

A la figure 6, la régulation de la consommation énergétique est réalisée au moyen de la méthode 100 selon l'invention. De la demande de réduction découle une ou plusieurs demandes de suspension, non représentées, qui sont reçues non pas au niveau du système d'exploitation mais au niveau de l'environnement d'exécution, c'est-à-dire au niveau applicatif des nœuds. Dans le cas présent, le nœud 2 exécute un travail pour l'application 1 et un travail pour l'application 2, chacun exécutés par quatre processus.

A la figure 7, la mise en suspension est ensuite effectuée au niveau des environnements d'exécution des nœuds 1 et 2 qui exécutent chacun un travail associé à l'application 1, puisque c'est cette application qui est visée par la demande de réduction. Les processus exécutant l'application 1 sur les nœuds 1 et 2 sont donc suspendus de façon synchrone au moyen d'un décompte temporel débuté à une date et un horaire fixé. Les processus des travaux suspendus apparaissent en gris sur la figure.

## Revendications

1. Méthode (100) d'optimisation de la consommation énergétique d'une infrastructure informatique (10) comprenant une pluralité de nœuds de calcul (11), chaque nœud de calcul (11) étant associé à une pluralité de travaux en cours d'exécution ou en attente d'exécution sur ledit nœud de calcul (11), la méthode (100) comportant les étapes suivantes :
- Réception (110) d'une demande de réduction de consommation énergétique comportant un objectif de réduction de consommation énergétique ;
- Détermination (120) d'un ensemble de travaux à suspendre parmi la pluralité de travaux associée à chaque nœud de calcul (11), l'ensemble de travaux étant déterminé en fonction de l'objectif de réduction de consommation énergétique reçu ;
- Emission (130) vers un environnement d'exécution de chaque nœud de calcul (11) associé à au moins un travail compris dans l'ensemble de travaux déterminé, d'une demande de suspension comprenant ledit travail ;
- A réception (140) d'une demande de suspension, suspension du travail compris dans la demande de suspension reçue, la suspension étant réalisée via un ensemble d'instructions non natives implémentées au niveau de l'environnement d'exécution du travail sur chaque nœud de calcul (11) de l'infrastructure informatique (10) associé au dit travail ;
- Attente active (150) par le travail suspendu d'un message d'arrêt de suspension comprenant ledit travail suspendu, l'attente active étant réalisée via un ensemble d'instructions non natives implémentées au niveau de l'environnement d'exécution du travail sur chaque nœud de calcul (11) de l'infrastructure informatique (10) associé au dit travail.

2. Méthode (100) selon la revendication 2, dans laquelle l'ensemble d'instructions est basé sur la norme Message Passing Interface.

3. Méthode (100) selon l'une des revendications précédentes, dans laquelle chaque travail est représenté par un ou plusieurs processus sur un ou plusieurs nœuds de calcul (11) de l'infrastructure informatique (10), et l'étape (140) de suspension dudit travail est une étape de suspension synchrone du ou des processus exécutant ledit travail.

4. Méthode (100) selon l'une des revendications précédentes, dans laquelle une pluralité de travaux répartie sur un ou plusieurs nœuds de calculs (11) est associée à une même application, et l'étape (140) de suspension de la méthode (100) est une étape de suspension de l'ensemble des travaux associés à ladite application.

5. Méthode (100) selon l'une des revendications précédentes, comportant en outre, à réception d'un message d'arrêt de suspension par l'environnement d'exécution du nœud de calcul (11), une étape (160) d'arrêt de la suspension du travail compris dans le message d'arrêt de suspension reçu, l'arrêt de suspension étant réalisé via un ensemble d'instructions non natives implémentées au niveau de l'environnement d'exécution du travail sur chaque nœud de calcul (11) de l'infrastructure informatique (10) associé au dit travail.

6. Méthode (100) selon l'une des revendications précédentes, dans laquelle la demande de réduction de consommation énergétique comprend en outre une information de levée de réduction, la méthode comprenant en outre une étape (170) d'émission du message d'arrêt de suspension vers l'environnement d'exécution du travail sur le nœud de calcul (11) correspondant, l'émission dépendant de ladite information de levée de réduction.

7. Méthode (100) selon l'une des revendications précédentes, dans laquelle la demande de réduction de consommation énergétique comprend en outre une information de date et horaire de réduction et/ou une information de durée de réduction.

8. Méthode (100) selon l'une des revendications précédentes, dans laquelle chaque travail est associé à au moins une information de travail et l'ensemble de travaux est en outre déterminé en fonction de l'information de travail associée à chaque travail.

9. Infrastructure informatique (10) comportant une pluralité de nœuds de calcul (11), chaque nœud de calcul (11) étant associé à une pluralité de travaux en cours d'exécution ou en attente d'exécution sur ledit nœud de calcul, l'infrastructure informatique (10) comprenant :
- Un module de réception (12), configuré pour recevoir (110) une demande de réduction de consommation énergétique comportant un objectif de réduction de consommation énergétique ;
- Un module de traitement (13), configuré pour réaliser les étapes suivantes :
∘ Détermination (120) d'un ensemble de travaux à suspendre parmi la pluralité de travaux associée à chaque nœud de calcul (11), l'ensemble de travaux étant déterminé en fonction de l'objectif de réduction de consommation énergétique reçu ;
∘ Emission (130) vers un environnement d'exécution de chaque nœud de calcul (11) associé à au moins un travail compris dans l'ensemble de travaux déterminé, d'une demande de suspension comprenant ledit travail ;
Chacun des nœuds de calcul (11) étant configuré pour réaliser les étapes suivantes au niveau de l'environnement d'exécution :
∘ A réception d'une demande de suspension, suspension (140) du travail compris dans la demande de suspension reçue ;
∘ Attente active (150) d'un message d'arrêt de suspension comprenant un travail suspendu.

10. Produit-programme d'ordinateur comprenant des instructions qui, quand le programme est exécuté sur un ordinateur, conduisent celui-ci à mettre en œuvre les étapes de la méthode (100) selon l'une quelconque des revendications 1 à 7.

11. Support d'enregistrement lisible par ordinateur comprenant des instructions qui, lorsqu'elles sont exécutées par un ordinateur, conduisent celui-ci à mettre en œuvre les étapes de la méthode (100) selon l'une quelconque des revendications 1 à 7.
